# EUROPEAN PATENT APPLICATION

(11) **EP 3 477 536 A1**
(43) Date of publication of application: **01.05.2019**
(21) Application number: 17199063.3
(22) Date of filing: 28.10.2017
(51) Int. Cl.: G06K 9/00

(54) **WEARABLE DEVICE CAPABLE OF RECOGNIZING HUMAN FACE AND LICENSE PLATE**

(71) Applicant: Leapsy International Ltd., 235 New Taipei City (TW); Wang, Po-Wen, 235 New Taipei City (TW)
(72) Inventor: WANG, Po-Wen, 235 New Taipei City (TW)
(74) Representative: Lang, Christian

(57) **Abstract**

A wearable device capable of recognizing a human face and a license plate includes a camera, an image capturing unit, a database, a central processing unit and a display unit. The camera receives external light to generate an image, and the image is captured by the image capturing unit. The captured image is transmitted to the central processing unit and recognized whether the image includes human faces or license plate of a car. The recognized data of human faces or license plate are compared with pre-stored data of human faces and license plate in the data base. When the recognized data matches the pre-stored data, the recognized data is shown in the display unit.

## Description

### BACKGROUND OF THE INVENTION

### Field of the Invention

The invention relates to a wearable device capable of recognizing a human face and a license plate.

### Description of the Related Art

Usually in the process of traffic banning or criminal investigation, it often needs to confirm the identity of personnel and vehicles. Police officers need to input an identity card number or a license plate number input to an electronic device by a keyboard or simply through handwriting, and connected to a database for inquiries. Therefore since it spends a certain amount of time, the opportunity for handling the case is often missed.

### BRIEF SUMMARY OF THE INVENTION

An object of the invention is to provide a wearable device capable of recognizing human face and license plate and method for recognizing human face and license plate. By capturing the image of a human face or license plate and identifying it, and then comparing it with human face data of the license plate data in a database, it can be know immediately whether the person or vehicle is the one been seeking.

The invention provides a wearable device capable of recognizing a human face and a license plate simultaneously. The wearable device in accordance with an exemplary embodiment of the invention includes a camera configured to receive external light to form an image; an image capturing unit configured to capture the image; a database configured to store a plurality of human face data and a plurality of license plate data; a central processing unit configured to receive the image and recognize a human face to obtain recognized human face data or recognized license plate data, read the human face data and the license plate data from the database and compare the recognized human face data or recognized license plate data with the human face data and the license plate data; and a display unit, wherein when the recognized human face data match the human face data or the recognized license plate data match the license plate data, the central processing unit transmits the recognized human face data or recognized license plate data to the display unit for displaying the recognized human face data or recognized license plate data.

By utilizing the wearable device for and the method for recognizing a human face and a license plate of the invention, persons or vehicles in front of a user can be recognized immediately and determined whether it is the person or the vehicle been seeking. Therefore, it can be applied to traffic management and criminal investigation and so on.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
Fig. 1 is a block diagram of an embodiment of a wearable device capable of recognizing human face and license plate of the invention; and
Fig. 2 is a flow chart of an embodiment of a method for recognizing human face and license plate of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

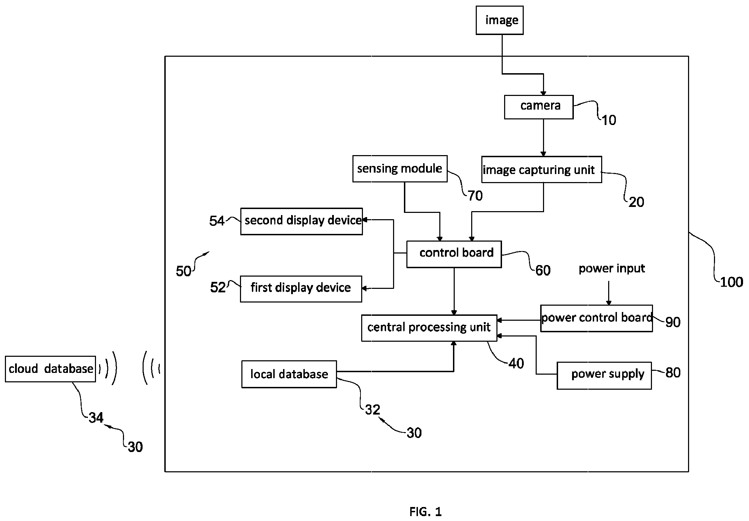

Referring to Fig. 1, a wearable device 100 capable of recognizing human face and license plate of the invention includes a camera 10, an image capturing unit 20, a database 30, a central processing unit 40 and a display unit 50. The camera 10 is configured to receive external light to form an image, and the image capturing unit 20 is configured to capture the image. In this embodiment, the image capturing unit 20 is a charge-coupled device (CCD) or a complementary metal-oxide-semiconductor (CMOS). The database 30 is configured to store a plurality of human face data and a plurality of license plate data. The central processing unit 40 is configured to receive the image and recognize a human face to obtain recognized human face data or recognized license plate data. The recognition of human face and license plate can be performed by known technologies which are not further described here. The central processing unit 40 reads the human face data and the license plate data from the database 30 and compares the recognized human face data or recognized license plate data with the human face data and the license plate data from the database 30. When the recognized human face data match the human face data or the recognized license plate data match the license plate data, the central processing unit 40 transmits the recognized human face data or recognized license plate data to the display unit 50 for displaying the recognized human face data or recognized license plate data.

In addition, the wearable device 100 further includes a control board 60 through which the image is transmitted to the central processing unit 40. The recognized human face data or the recognized license plate data are transmitted to the display unit 50 through the control board 60. The control board 60 includes an analog/digital converting unit. The analog images are converted to digital images by the analog/digital converting unit. The digital images are then transmitted to the central processing unit 40 for recognition and comparison. The recognized data matching the data in the database 30 are converted into analog image signals which are transmitted to the display unit 50 or analog audio signals which are transmitted to a speaker (not shown).

The wearable device 100 further includes a thermal sensing module 70 configured to capture the image and generate a thermal image. The display unit 50 includes a first display device 52 and a second display device 54. The image is transmitted to the first display device 52, and the thermal image is transmitted to the second display device 54. When the recognized human face data match the human face data or the recognized license plate data match the license plate data, the central processing unit 40 transmits the recognized human face data or recognized license plate data to the first display device 52 for displaying the recognized human face data or recognized license plate data.

The database 30 includes a local database 32 and a cloud database 34. The local database 32 is connected to the central processing unit 40, and the cloud database 34 is connected to the central processing unit 40 through a network. The network is a wireless network or a wired network. The human face data and the license plate data in the local database 32 are the same as the human face data and the license plate data in the cloud database 34. In another embodiment, the human face data and the license plate data in the local database 32 are different from the human face data and the license plate data in the cloud database 34.

The wearable device 100 further includes a power supply 80 connected to the central processing unit 40. In this embodiment, the power supply 80 is a battery. In another embodiment, the wearable device 100 further includes a power control board 90 connected to the central processing unit 40, and an external power supply is coupled to the central processing unit 40 via the power control board 90. The external power supply may provide power for the wearable device 100 or charge the power supply 80.

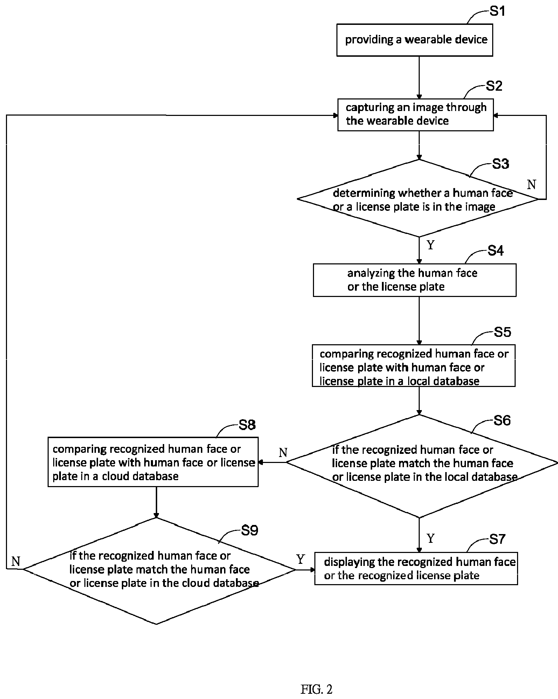

Referring to Fig. 2, a method for recognizing a human face and a license plate is disclosed. In a step S1, a wearable device including an image capturing device is provided. Afterwards, the procedure enters a step S2. In the step S2, an image is captured through the image capturing device. Afterwards, the procedure enters a step S3. In the step S3, it is determined whether a human face or a license plate is in the image. Afterwards, the procedure enters a step S4. In the step S4, the human face or the license plate is analyzed to generate recognized human face data or recognized license plate data when a human face or a license plate is in the image. Afterwards, the procedure enters a step S5. In the step S5, the recognized human face data or the recognized license plate data is compared with a plurality of human face data and a plurality of license plate data saved in a local database. Afterwards, the procedure enters a step S6. In the step S6, it is determined whether the recognized human face data match the human face data in the database or the recognized license plate data match the license plate data in the local database. If the recognized human face data match the human face data in the database or the recognized license plate data match the license plate data in the local database, then the procedure enters a step S7. In the step S7, the recognized human face data or the recognized license plate data is displayed. If the recognized human face data do not match the human face data in the local database and the recognized license plate data do not match the license plate data in the local database, the procedure enters a step S8. In the step S8, the recognized human face data or the recognized license plate data is compared with a plurality of human face data and a plurality of license plate data saved in a cloud database. Afterwards, the procedure enters a step S9. In the step S9, it is determined whether the recognized human face data match the human face data in the database or the recognized license plate data match the license plate data in the cloud database. If the recognized human face data match the human face data in the database or the recognized license plate data match the license plate data in the cloud database, then the procedure enters a step S7, wherein the recognized human face data or the recognized license plate data is displayed. If the recognized human face data do not match the human face data in the local database and the recognized license plate data do not match the license plate data in the local database, the procedure goes back to the step S2, wherein another image is captured through the image capturing device.

By utilizing the wearable device for and the method for recognizing a human face and a license plate of the invention, persons or vehicles in front of a user can be recognized immediately and determined whether it is the person or the vehicle been seeking. Therefore, it can be applied to traffic management and criminal investigation and so on.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A wearable device capable of recognizing a human face and a license plate simultaneously, comprising:
a camera configured to receive external light to form an image;
an image capturing unit configured to capture the image;
a database configured to store a plurality of human face data and a plurality of license plate data;
a central processing unit configured to receive the image and recognize a human face to obtain recognized human face data or recognized license plate data, read the human face data and the license plate data from the database and compare the recognized human face data or recognized license plate data with the human face data and the license plate data; and
a display unit, wherein when the recognized human face data match the human face data or the recognized license plate data match the license plate data, the central processing unit transmits the recognized human face data or recognized license plate data to the display unit for displaying the recognized human face data or recognized license plate data.

2. The wearable device as claimed in claim 1, further comprising a control board through which the image is transmitted to the central processing unit, wherein the recognized human face data or the recognized license plate data are transmitted to the display unit through the control board.

3. The wearable device as claimed in claim 1, wherein the database comprises a local database connected to the central processing unit.

4. The wearable device as claimed in claim 3, wherein the database further comprises a cloud database connected to the central processing unit through a network.

5. The wearable device as claimed in claim 1, wherein the database comprises a cloud database connected to the central processing unit through a network.

6. The wearable device as claimed in claim 1, wherein the display unit comprises a first display device, and the image is transmitted to the first display device and displayed on the first display device, when the recognized human face data match the human face data or the recognized license plate data match the license plate data, the central processing unit transmits the recognized human face data or recognized license plate data to the first display device for displaying the recognized human face data or recognized license plate data.

7. The wearable device as claimed in claim 6, further comprising a thermal sensing module configured to capture the image and generate a thermal image, wherein the display unit further comprises a second display device, and the thermal image is transmitted to the second display device.

8. The wearable device as claimed in claim 1, further comprising a thermal sensing module configured to capture the image and generate a thermal image, wherein the thermal image is transmitted to the second display device.
